# EUROPEAN PATENT APPLICATION

(11) **EP 3 506 056 A1**
(43) Date of publication of application: **03.07.2019**
(21) Application number: 17211257.5
(22) Date of filing: 30.12.2017
(51) Int. Cl.: G06F 3/01, G06F 3/0488

(54) **SYSTEM AND METHOD FOR PROVIDING HAPTIC FEEDBACK WHEN OPERATING A TOUCH SCREEN**

(71) Applicant: Advanced Digital Broadcast S.A., 1262 Eysins (CH)
(72) Inventor: Dabrowski, Bartosz, 65-119 Zielona Gora (PL)
(74) Representative: Blonski, Pawel

(57) **Abstract**

A method for providing haptic feedback when operating a touch screen (200), the method comprising the steps of: awaiting a first touch point, at touch screen (200) coordinates, the touch point having a predefined duration (314); awaiting a second touch point, at substantially the same touch screen (200) coordinates, the second touch action being received within a predefined time dT threshold from removing the first touch point; awaiting a movement of the second touch point and in case the movement is present, checking whether said movement is such that is has crossed to different touch screen (200) coordinates having an associated tactile area (203), and it has, providing a tactile feedback.

## Description

### TECHNICAL FIELD

The present invention relates to a touch screen, and more particularly to a system and method for providing haptic feedback when operating a touch screen.

### BACKGROUND OF THE INVENTION

With the popularization of mobile devices, touch or multi-touch interface is becoming more popular. Hence, there is a need to improve the ways of controlling touch or multi-touch interface in an effective manner.

A touch device is typically referred to as a device whose control is realized, but not limited to, by giving commands or selecting objects or the like that are displayed on a touch screen by the means of touching that screen (i.e. touch commands or touch gestures).

A multi-touch device is typically referred to as a touch-sensitive device that can accept and process two or more of the touch commands at once. A touch point is typically referred to as a point of touching of the touch-sensitive device with a finger, a stylus, a capacitive pen or the like.

Adding a touch point is typically referred to as an action of placing a finger, stylus, capacitive pen or the like on the touch-sensitive device so that it touches its screen's surface. Breaking or removing a touch point is typically referred to as an action of moving a touching finger, stylus, capacity pen or the like away from the touch device so that it does not touch the screen of the touch-sensitive device any more.

Known touch-sensitive devices provide a variety of commands that allow for interaction with the objects displayed on a multi-touch screen. These include the following: a tap (touching the screen for a short time only), a two-finger tap (touching the screen for a short time only in two points simultaneously), a drag (touching an object on the screen, keeping a touch and moving the touch point to another location), a pinch (touching the screen at two places, keeping a touch and then moving the two touch points closer to each other), a zoom or a pinch out (touching the screen at two places, keeping a touch and then moving the two touch points further apart from each other), a flick (touching the touch-sensitive screen and immediately moving the touch point sidewards).

The present invention relates mainly to the tap command although a skilled person will appreciate that it can be easily adopted to other commands as well. Each and every of the aforementioned commands is designed to be executed on a flat surface of the screen. As a consequence there is no tactile feedback provided by the objects being operated on that would allow for operation on the screen without looking at it.

Such tactile feedback may be seen as an analogy to a typical computer keyboard that by its inherent shape of its keys provides tactile feedback as to where the keys are placed. Similarly, the keyboard typically provides tactile feedback element on the 'F' and 'J' keys to allow smoother operation without looking at the actually manipulated keys.

Since the objects, that the aforementioned touch commands operate on, are typically placed dynamically on the screen, shaping the screen to provide any sort of tactile feedback is typically undesired.

Known solutions include a US patent 6,710,518 B2 disclosing an electronic device that includes an electromechanical transducer that is capable of generating an impulse of mechanical energy that can be felt. This tactile feedback is delivered upon pressing of a touch screen or similar input actuator. In other words, a user receives tactile acknowledgment of a successful operation of a manually operable input.

Other solutions include US 2006/0052143 disclosing a method for providing tactile feedback in reaction to pressing or touching an element on a touch-sensitive screen. This solution is based on piezoelectric actuators that are believed to produce a much more realistic click sensation.

### SUMMARY AND OBJECTS OF THE PRESENT INVENTION

A first object of the present invention is a method for providing haptic feedback when operating a touch screen, the method comprising the steps of: detecting a first touch point on the touch screen; waiting for a predefined period of time to elapse; checking whether the first touch point has been removed and if it has not, entering a haptic feedback emulation mode; checking whether the first touch point has been removed and if it has, recording a time TO of this event; detecting a second touch point on the touch screen at substantially the same touch screen coordinates as the first touch point; recording a time T1 of the second touch point event; determining a time dT elapsed from removing of the first touch point to applying the second touch point by subtracting TO from T1; checking if the dT is less than a designated time and if it is, processing a click event for the second touch point; checking whether the second touch point has been removed and if it has not, detecting movement and if movement has been detected, verifying whether the movement caused entering of a tactile area or crossing a border of a tactile area and if it has, providing a tactile feedback.

Preferably, said tactile feedback is a vibration, of a predefined duration, of the device comprising said touch screen.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing system and method for providing haptic feedback when operating a touch screen. Further details and features of the present invention, its nature and various advantages will become more apparent from the following detailed description of the preferred embodiments shown in a drawing, in which:
Fig. 1 presents a schematic of an exemplary touch input device;
Fig. 2 presents exemplary GUI element displayed by the touch input device;
Fig. 3 presents a method of providing tactile feedback; and
Fig. 4 presents a high level version of the method presented in Fig. 3.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

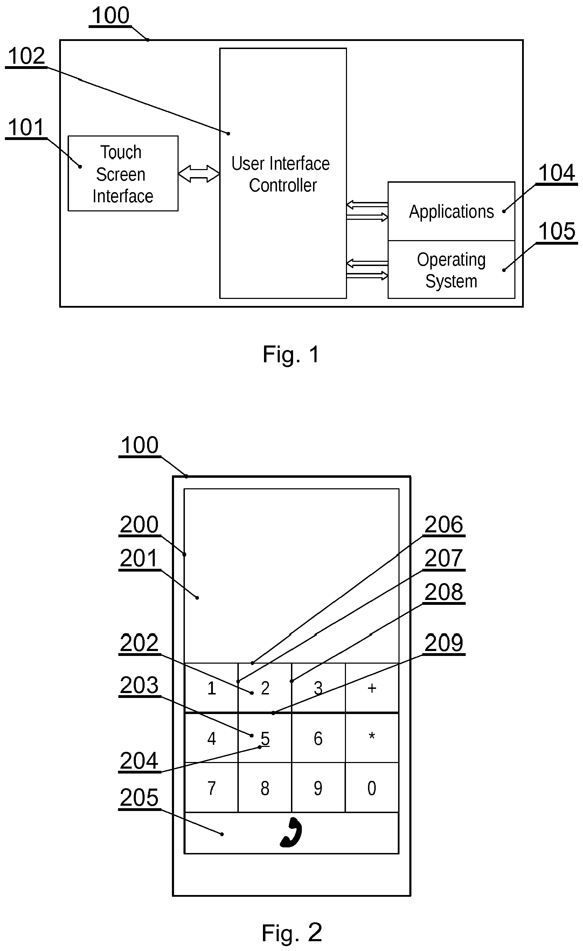

One exemplary embodiment of the present invention is a touch-sensitive device according to Fig. 1 utilizing the methods for controlling the user interface as described in the present invention.

Fig. 1 shows schematically a structure of the touch-sensitive input device (100). The touch-sensitive input device (100) comprises a touch screen interface (101) configured to receive touch input from a user and to display graphical data.

The touch screen interface (101) (also known as a touch-sensitive display) may be of any suitable type, such as a capacitive, resistive, infrared, or surface acoustic wave (SAW) touch screen.

A user interface controller (102) is configured to operate the method according to the invention, i.e. to control the display of various graphical objects on the screen in response to the touch input received via the touch screen interface (101).

This response may comprise, but is not limited to, a change in display or providing vibration feedback. The operation of the device (100) is controlled by an operating system (104) and various applications (105).

The touch input device (100) can be any type of a device comprising a touch screen, such as a personal computer or a smart-phone or a tablet or a laptop or a television set or the like. Naturally, such devices comprise common components such a main CPU, various kinds of memories and communication interfaces.

The touch input device (100) is capable of displaying a graphical user interface (GUI) on its screen (200). Fig. 2 presents an exemplary GUI comprising typical GUI controls such as buttons and static items such as labels or text entry field(s).

The GUI of Fig. 2 comprises a set of numeric buttons for telephone number selection labeled 0 through 9 as well as commonly used '+' (plus) and '*' (asterisk) characters. The GUI preferably also comprises a dial button (205). The GUI may also comprise other elements that may be located in area (201).

It is apparent that each button has its borders i.e. lines that constitute its bounds in each direction. For instance the button (202), labeled '2', has borders: top (206), left (207), right (208) and bottom (209). Also the button (203), labeled '5', has a designated marker (204). This marker (204) will be described later on.

The present solutions allow, the user of the described GUI of Fig. 2, to click any of the buttons. A click is understood as adding a single touch point to the GUI and immediately removing it.

The available solutions may also provide the user with a tactile feedback as to whether the button was actually clicked, namely the touch input device (100) may preferably vibrate in reaction to the click gesture. However, the disadvantage of the solution is that the user is not able to identify the key they are going to click before they click it.

The present invention discloses a touch input device (100) attempting to overcome that disadvantage. The touch input device (100) defines at least one tactile area (203) on its screen (200).

An exemplary embodiment of such tactile area may comprise a marker (204) under the label '5'. The tactile area (203) may and typically will be a little larger than the marker (204) itself to provide better user experience.

The purpose of that area is to provide tactile feedback upon moving of a touch point into it. The touch input device (100) also defines at least one tactile border on its screen (200). Exemplary embodiments of such border are button bounds (206, 207, 208 and 209) or otherwise borders.

The purpose of those borders is to provide tactile feedback upon crossing of a touch point across them. The touch input device (100) also defines a reverse click logic. The reverse click logic is understood as removing a single touch point from the GUI and immediately placing it back at the same location, the same location being either same coordinates on the screen (200) or coordinates substantially similar to be considered the same.

It will become apparent, to a person skilled in the art, that more tactile shapes similar to a tactile borders (206, 207, 208 and 209) and a tactile (204) area may be defined, which is in no way limiting to the present invention. The method (300), specified below, may be easily adapted to recognize them.

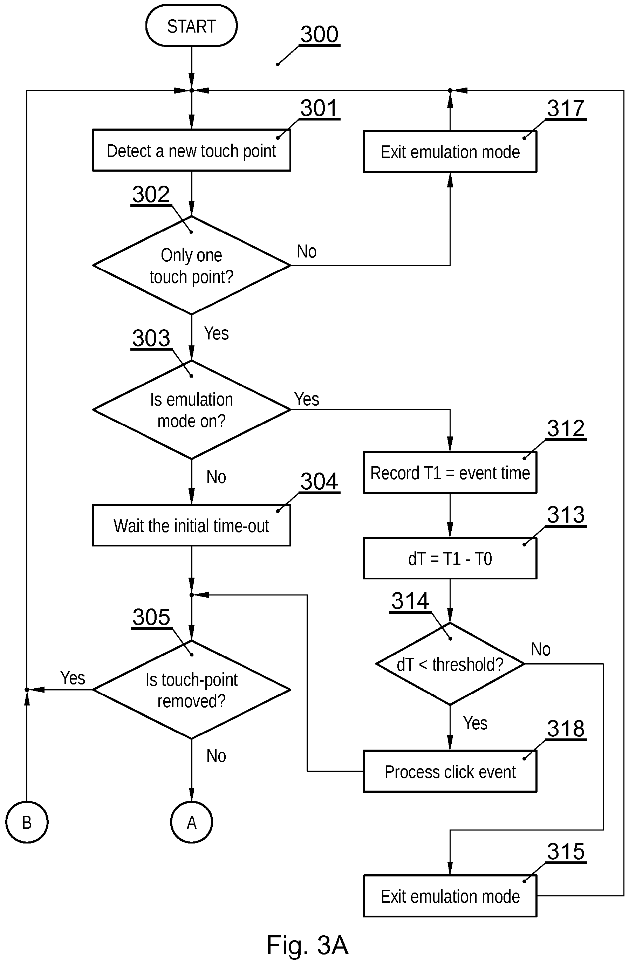

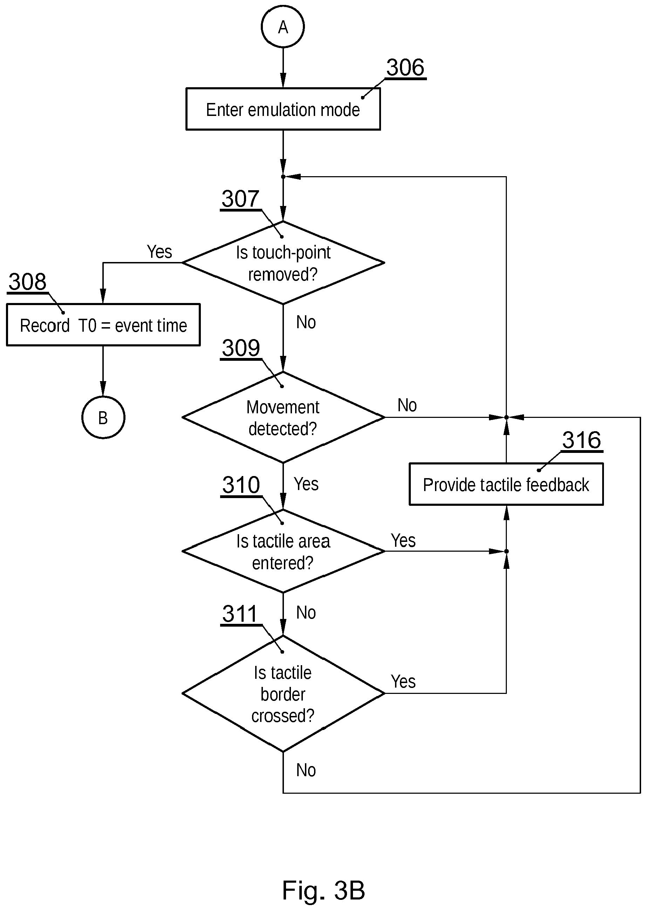

The touch input device (100) is capable of executing the method (300) according to Fig. 3 that allows users to know, which key they are going to click before they finally click it.

To this end, the method (300) begins at step (301) with a detection of a new touch point on the touch screen (200). Next, the method checks whether this is the only touch point present at a given time at step (302).

It is apparent, to one skilled in the art, that the present method of the present invention may be extended to support many touch points. This is in no way limiting to the present invention. The present description will be presented for one test point only to keep the simplicity and clarity of the process.

If there are more touch points the method exits the emulation mode at step (317) (if not in emulation mode, this step effectively does nothing) and moves back to step (301).

It will become evident that this may, and typically will, be processed as a well known click event which is in no way limiting to the present invention. Otherwise, if at step (302) only one touch point is present, then at step (303) the method checks whether emulation mode is active.

The sense of emulation mode will become clear from the following detailed description. If the emulation mode is off (this is the case when the method first executes e.g. there were not any touch points for a long period of time and a new touch point has been detected after such inactivity period) the method waits at step (304) for a predefined period of time e.g. 500ms (an initial timeout, which may also be set at different duration e.g. 250ms or 400ms). This initial timeout has a purpose of verifying continuity of the touch of step (302).

Next, at step (305), the method checks whether the touch point has been removed. If yes, the method moves back to step (301) to detect a new touch point. Otherwise, the method moves on to step (306) and enters said emulation mode.

The emulation mode means that the method will attempt to emulate the tactile feedback similar to a keyboard i.e. of moving between keys and the feedback element of keys 'F' and 'J'.

Next, at step (307), the method checks whether the touch point has been removed. If it has, the method will try to emulate a click. It is to be noted that said click gesture will be comprised of lifting a finger and immediately placing it back on the screen i.e. will implement the aforementioned reversed click logic instead of a typical sequence of those actions. Hence, if said touch point has been removed at step (307), the method records a time of this event at step (308). The value is T0. Next the method moves to detect a touch point at step (301). The sequence moves on to steps (301) and (302).

If at this point there are two or more touch points, the method exits the emulation mode at step (317). If at step (302) there is only one touch point, the method checks if emulation mode is active (303), and at this point in flow of the description it is active, and moves to step (312) and records the time of the added touch point event. The value is T1.

When the emulation is active, at step (312) it also means that the coordinates of the second touch point are at substantially the same touch screen (200) coordinates as the coordinates of the first touch point as previously explained with respect to the reverse click logic.

Next, at step (313), the method determines the time elapsed from removing of the first touch point to application of the second touch point by subtracting TO from T1. The value of difference is dT. Next at step (314) the method checks if the dT value is less than a designated time e.g. 100ms. If it is not, then this means the touch point was absent for too long and the method exits emulation mode at step (315) and moves on to step (301).

Otherwise, the method determines that the second touch point was actually a click event caused by the aforementioned reversed click logic and processes a click event at the second touch point at step (318).

Next the method moves back to step (307) to monitor breaking of the touch point. If the touch point is not removed, the method moves to step (309) to detect movement. If no movement is detected, the method moves back to step (308) to detect breaking of the touch point.

Otherwise, movement is detected and the method moves to step (310) and verifies if the movement has caused entering of a tactile area. If it has, the method provides tactile feedback e.g. in a form of short vibration at step (316). Otherwise, the method moves to step (311) in order to verify if a tactile border has been crossed. If it has, the method provides tactile feedback e.g. in a form of short (or otherwise of a predefined duration) vibration at step (316). Otherwise, the method moves back to step (308) in order to detect breaking of the touch point.

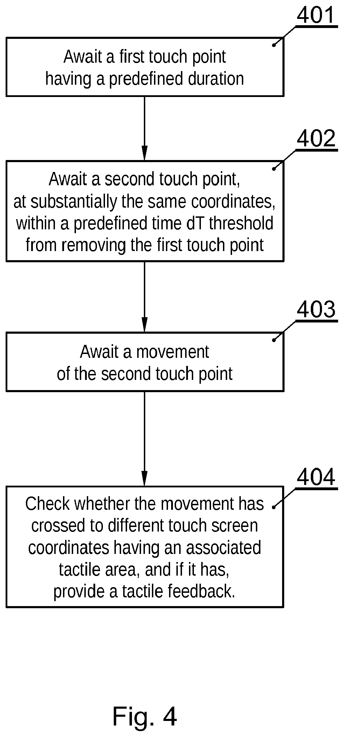

Fig. 4 presents a high level version of the method presented in Fig. 3. The method starts at step (401) from awaiting a first touch point, at touch screen (200) coordinates, the touch point having a predefined duration (314).

Subsequently, at step (402), the method is awaiting a second touch point, at substantially the same touch screen (200) coordinates, the second touch action being received within a predefined time dT threshold from removing the first touch point. In such case, the method may also determine that the second touch point was actually a click event caused by the aforementioned reversed click logic and may process a click event at the second touch point (318).

Next, the method proceeds to awaiting (403) a movement of the second touch point and in case the movement is present, checking whether said movement is such that is has crossed to different touch screen (200) coordinates having an associated tactile area (203), and if it is, providing a tactile feedback (404).

Alternatively, the movement may cross a tactile border in which case such border crossing may also be signaled by providing a tactile feedback.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for providing tactile feedback may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for providing haptic feedback when operating a touch screen (200), the method comprising the steps of:
• detecting (301) a first touch point on the touch screen (200);
• waiting (304) for a predefined period of time to elapse;
the method being **characterized in that** it further comprises the steps of:
• checking (305) whether the first touch point has been removed and if it has not, entering (306) a haptic feedback emulation mode;
• checking (307) whether the first touch point has been removed and if it has, recording (308) a time TO of this event;
• detecting (301) a second touch point on the touch screen (200) at substantially the same touch screen (200) coordinates as the first touch point;
• recording (312) a time T1 of the second touch point event;
• determining (313) a time dT elapsed from removing of the first touch point to applying the second touch point by subtracting TO from T1;
• checking (314) if the dT is less than a designated time and if it is, processing a click event (318) for the second touch point;
• checking (307) whether the second touch point has been removed and if it has not, detecting movement (309) and if movement has been detected, verifying whether the movement caused entering of a tactile area (310) or crossing a border of a tactile area (311) and if it has, providing a tactile feedback (316).

2. The method according to claim 1 wherein said tactile feedback is a vibration, of a predefined duration, of the device comprising said touch screen (200).

3. A computer program comprising program code means for performing all the steps of the computer-implemented method according to claim 1 when said program is run on a computer.

4. A computer readable medium storing computer-executable instructions performing all the steps of the computer-implemented method according to claim 1 when executed on a computer.

5. A system (100) for providing haptic feedback when operating a touch screen (200) the system comprising:
• a touch screen interface (101) configured to receive touch input from a user and to display graphical data;
• a user interface controller (102) is configured to control displaying of graphical objects on the touch screen (200) in response to a touch input received via the touch screen interface (101)
the system being **characterized in that**
• the user interface controller (102) is configured to execute all steps of the method according to claim 1.
